# EUROPÄISCHE PATENTSCHRIFT

(11) **EP 1 216 773 B1**
(45) Veröffentlichungstag und Bekanntmachung des Hinweises auf die Patenterteilung: **19.03.2003**
(21) Anmeldenummer: 01129950.0
(22) Anmeldetag: 17.12.2001
(51) Int. Cl.: B23B 3/00, B23Q 1/54, B23Q 7/00

(54) **Werkzeugmaschine, insbesondere Fräsbearbeitungszentrum**
Machine-tool, especially milling center
Machine-outil, en particulier centre de fraisage

(30) Priorität: 21.12.2000 DE 10064416
(43) Veröffentlichungstag der Anmeldung: 26.06.2002
(73) Patentinhaber: StarragHeckert GmbH, 09117 Chemnitz (DE)
(72) Erfinder: Pönisch, Achim, 09573 Erdmannsdorf (DE)
(74) Vertreter: Rumrich, Gabriele

(56) Entgegenhaltungen:
- DE-A- 2 833 145

## Beschreibung

Die Erfindung betrifft eine Werkzeugmaschine, insbesondere Fräsbearbeitungszentrum, gemäß dem Oberbegriff des Anspruchs 1. Eine solche Maschine ist aus der DE-A-2 833 145 bekannt.

Bekannte Bearbeitungszentren für die Mehrseitenbearbeitung umfassen beispielsweise eine Bearbeitungseinheit mit einem Werkzeugträger, einen um eine vertikale Achse drehbaren NC-Drehtisch, auf dem Paletten und/oder Werkstücke aufgespannt und bearbeitet werden können, sowie eine Palettenwechseleinrichtung, mit der eine in Wechselposition befindliche Palette vom NC-Drehtisch abhebbar, in eine Warteposition schwenkbar und dort wieder absetzbar ist und umgekehrt. Die Bearbeitung der fünf freiliegenden Seiten des Werkstückes erfolgt hierbei durch translatorisches Verfahren des Werkzeuges und/oder Bewegen des NC-Drehtisches. Dabei befindet sich die auf dem NC-Drehtisch angeordnete, das Werkstück tragende Palette immer in der horizontalen Lage.

Das hat den Nachteil, daß die während der Bearbeitung entstehenden Späne auf die Palette oder den NC-Drehtisch fallen und dadurch die Späneabführung behindert wird.

Eine Verbesserung demgegenüber zeigt eine Lösung zur 5-Seiten-Bearbeitung (Prospekt der Fa. Deckel Maho - Die neuen Bettmaschinen - Die DMU P-Reihe), bei der als Palettenaufspanntisch ein NC-Drehtisch zur Anwendung kommt, der auf einer drehbeweglich gelagerten Schwenkwippe befestigt ist. Dadurch ist neben der Drehbewegung um die Drehachse des Rundtisches auch eine Schwenkbewegung um die orthogonal zu der Drehachse verlaufende Schwenkachse der Schwenkwippe möglich, wodurch zumindest eine teilweise Bearbeitung des Werkstücks in für den Spänefall günstiger vertikaler Lage des NC-Drehtisches erfolgen kann.

Allerdings befindet sich bei dieser Anordnung des NC-Drehtisches der Schnittpunkt der NC-Schwenkachse der Schwenkwippe und der NC-Drehachse des Rundtisches relativ weit entfernt von der Werkstückmitte, wodurch Kursverluste unvermeidlich sind. Diese Kursverluste bedingen wiederum größere Abmessungen der Maschinenbaugruppen.

Der Palettenwechsel erfolgt ebenfalls mittels eines Paletten-Drehwechslers bzw. Paletten-Schiebewechslers, der die Paletten an den Arbeitsraum heranführt, wo sie dann innerhalb des Arbeitsraumes ausgetauscht werden.

Deshalb besteht ein weiterer Nachteil der angeführten Lösungen des Standes der Technik in der langen Palettenwechselzeit bei relativ großem gerätetechnischen Aufwand.

Aufgabe der Erfindung ist es, eine Werkzeugmaschine, insbesondere Fräsbearbeitungszentrum, entsprechend dem Oberbegriff des Patentanspruchs zu schaffen, bei der bei Senkung des Zeitaufwandes für den Palettenwechsel sowie Verringerung des gerätetechnischen Aufwandes Kursverluste vermieden werden. Insbesondere soll eine optimale Lösung für Werkzeugmaschinen, bei denen das Werkzeug alle translatorischen Bewegungen ausführt, gefunden werden. Diese Aufgabe wird gemäß Anspruch 1 gelöst. Vorteilhafte Ausgestaltungen sind in den Unteransprüchen beschrieben.

Erfindungsgemäß ist der NC-Drehtisch um eine dritte, sowohl zur NC-Drehachse als auch zur NC-Schwenkachse orthogonal verlaufende, Achse schwenkbar.

Dabei ist der NC-Drehtisch bevorzugt durch eine Schwenkbewegung um die dritte Achse aus einer vertikalen in eine horizontale Position und umgekehrt bringbar.

In der vertikalen Position des NC-Drehtisches verlaufen die NC-Drehachse und die NC-Schwenkachse orthogonal zueinander und schneiden sich annähernd im Mittelpunkt des sich auf dem NC-Drehtisch befindlichen Werkstückes. In der horizontalen Position des NC-Drehtisches verlaufen die NC-Drehachse und die NC-Schwenkachse parallel zueinander.

Der NC-Drehtisch ist vorzugsweise auf einem Schwenkarm eines um die senkrechte NC-Schwenkachse drehbaren Schwenkkörpers angeordnet, wobei der Schwenkarm zudem um die waagerechte, durch einen an seinem werkstückabgewandten, schwenkkörpernahen Ende befindlichen Drehpunkt führende Achse schwenkbar ist.

Der NC-Drehtisch ist durch den um die dritte Achse bewegbaren Schwenkarm aus einer vertikalen Bearbeitungsposition in eine horizontale Palettenwechselposition außerhalb des Arbeitsraumes und umgekehrt schwenkbar.

Die auf dem NC-Drehtisch befestigte und mit diesem aus dem Arbeitsraum herausschwenkbare Palette ist mit einem außerhalb des Arbeitsraumes befindlichen Spannplatz in und außer Eingriff bringbar.

Eine mögliche Ausführung der Erfindung sieht innerhalb des Schwenkbereiches des um die NC-Schwenkachse drehbaren Schwenkkörpers die Anordnung mehrerer Spannplätze für Paletten und/oder Werkstücke vor.

Die Mittelachsen der Spannplätze sind hierbei auf einem fiktiven Kreisbogen angeordnet, dessen Radius dem Abstand der NC-Drehachse des sich in der horizontalen Lage befindenden, auf dem Schwenkarm befestigten NC-Drehtisches von der NC-Schwenkachse entspricht. Außerdem ist durch den bei der Drehung um die NC-Schwenkachse des Schwenkkörpers verwirklichten Schwenkbereich der NC-Drehtisch in eine Position gegenüber der das Werkzeug tragenden Bearbeitungseinheit bringbar, die eine Bearbeitung von mehr als fünf Seiten des Werkstücks ermöglicht.

Während der gesamten Mehrseitenbearbeitung des auf der Palette des NC-Drehtisches aufgespannten Werkstücks wird der NC-Drehtisch vom Schwenkarm des Schwenkkörpers in einer vertikalen Position gehalten.

Die Erfindung wird nachstehend an einem Ausführungsbeispiel näher erläutert. In der zugehörigen schematischen Zeichnung zeigen:
Fig. 1: eine Seitenansicht und eine Draufsicht eines Fräsbearbeitungszentrums mit einem sich in einer vertikalen Bearbeitungsposition befindlichen NC-Schwenkdrehtisch
Fig. 2: eine Seitenansicht und eine Draufsicht eines Fräsbearbeitungszentrums mit einem sich in einer horizontalen Palettenwechselposition befindlichen NC-Schwenkdrehtisch am Spannplatz 1
Fig. 3: eine Draufsicht eines Fräsbearbeitungszentrums mit einem sich in einer horizontalen Palettenwechselposition befindlichen NC-Schwenkdrehtisch am Spannplatz 2
Fig. 4: eine Seitenansicht und eine Draufsicht eines Fräsbearbeitungszentrums mit einem sich in einer vertikalen Bearbeitungsposition befindlichen NC-Schwenkdrehtisch und einer auf Spannplatz 1 angeordneten Palette
Fig. 5: eine Seitenansicht und eine Draufsicht eines Fräsbearbeitungszentrums mit einem NC-Schwenkdrehtisch und 5 Spannplätzen

Ein Fräsbearbeitungszentrum weist eine hier nicht näher beschriebene Bearbeitungseinheit 1 mit einer waagerechten Arbeitsspindel, eine Werkstückseite 2 sowie zwei feste Spannplätze 3 oder - optional dazu - zwei drehbare Spannplätze 4 zum wechselseitigen Tausch der Werkstücke auf.

Die Werkstückseite 2 besteht aus einem NC-Drehtisch 5, der eine Palette 6 aufnimmt. Auf letzterer wiederum ist ein Werkstück 7 - in der Zeichnung ist es in seiner maximal möglichen Größe dargestellt - befestigt. Der NC-Drehtisch 5 ist um eine durch die Mitte des Werkstückes 7 verlaufende NC-Drehachse 8 um einen im Grunde unendlich großen Drehwinkel 9 drehbar.

Dabei ist der NC-Drehtisch 5 auf einem Schwenkarm 10 eines Schwenkkörpers 11 angeordnet, der wiederum um eine NC-Schwenkachse 12 drehbar ist.

Die Anordnung des Schwenkkörpers 11 ist dergestalt, daß in der vertikalen Bearbeitungsposition des sich auf dem Schwenkarm 10 befindenden NC-Drehtisches 5 die NC-Schwenkachse 12 orthogonal zur NC-Drehachse 8 verläuft und diese annähernd in der Mitte des Werkstückes 7 schneidet.

Der durch die Drehung um die NC-Schwenkachse 12 des Schwenkkörpers 11 verwirklichte Schwenkbereich 13 kann im hier dargestellten Ausführungsbeispiel bis zu einem Winkel von 180° reichen.

Der am Schwenkkörper 11 angeordnete, den NC-Drehtisch 5 aufnehmende Schwenkarm 10 ist um eine waagerechte Achse 14, die durch einen am werkstückabgewandten Ende des Schwenkarmes 10 befindlichen Drehpunkt 14a führt, schwenkbar gelagert. Diese Achse 14 verläuft wiederum orthogonal sowohl zur NC-Drehachse 8 als auch zur NC-Schwenkachse 12 und umfaßt einen vom Schwenkarm 10 verwirklichten Schwenkbereich von etwa 90°.

Diese gesamte Werkstückseite 2 ist von einer aufschiebbaren Arbeitsraumverkleidung 15 umgeben.

Am festen Spannplatz 3 außerhalb der Arbeitsraumverkleidung 15 befinden sich formschlüssige Aufnahmeelemente, z.B. Aufnahmezapfen 16, zur Aufnahme der das Werkstück 7 tragenden Palette 6. Ebenso können drehbare Spannplätze 4 verwendet werden, die gegenüber den festen Spannplätzen 3 den Vorteil haben, daß der Bediener von allen Seiten freien Zugang hat. Am drehbaren Spannplatz 4 sind entsprechend Aufnahmezapfen 17 angeordnet.

Der drehbare Spannplatzträger 18 weist eine durch die Mitte des Werkstückes 7 koaxial zur NC-Schwenkachse 12 verlaufende Drehachse 19 auf.

Dabei sind an einem ersten und einem zweiten Spannplatz 20 und 21 jeweils eine Palette 22 und eine Palette 23 abgelegt.

Da der Schwenkbereich 13 der NC-Schwenkachse 12, um die der Schwenkkörper 11 drehbar ist, einen bis zu 180° großen Winkel überstreichen kann, ist es durchaus möglich, mehr als zwei Spannplätze auf diesem den Palettenwechselpositionen entsprechenden Kreisbogen anzuordnen.

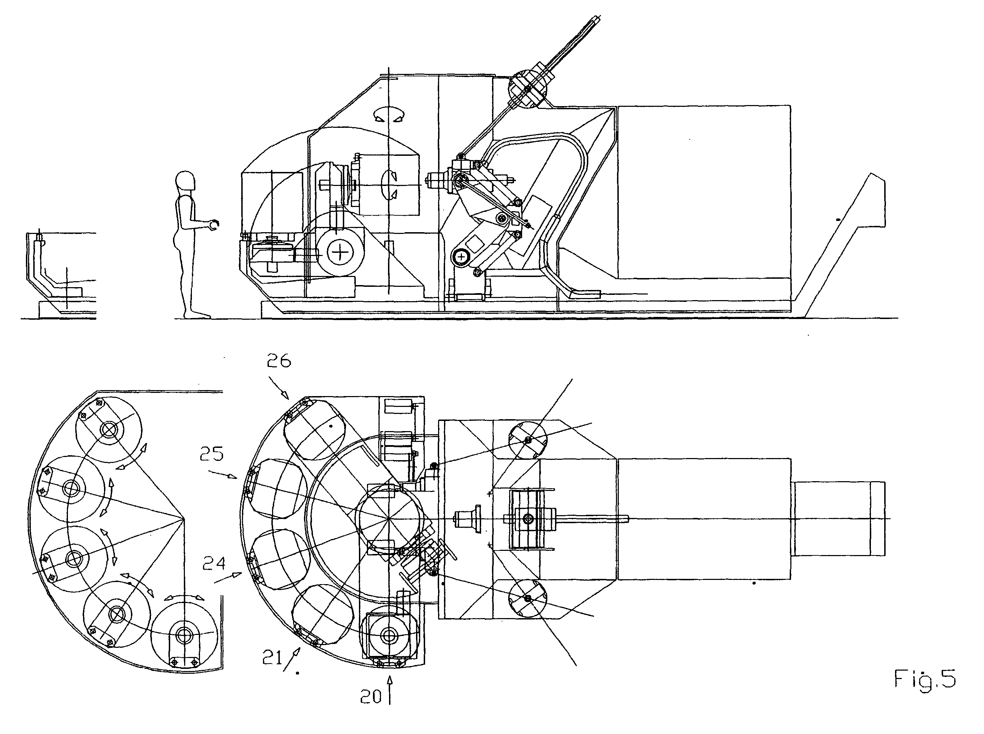

So ist in Fig. 5 eine Variante mit fünf Spannplätzen 20, 21, 24, 25, 26 dargestellt. Dabei können sowohl feste als auch drehbare Spannplätze zur Anwendung kommen.

Die Mittelachsen der Spannplätze 20, 21, 24, 25, 26 befinden sich dabei auf einem fiktiven Kreisbogen, dessen Radius dem Abstand der NC-Drehachse 8 von der NC-Schwenkachse 12 bei in horizontaler Position auf dem Schwenkarm 10 befindlichen NC-Drehtisch 8 entspricht.

### Die Wirkungsweise ist folgende:

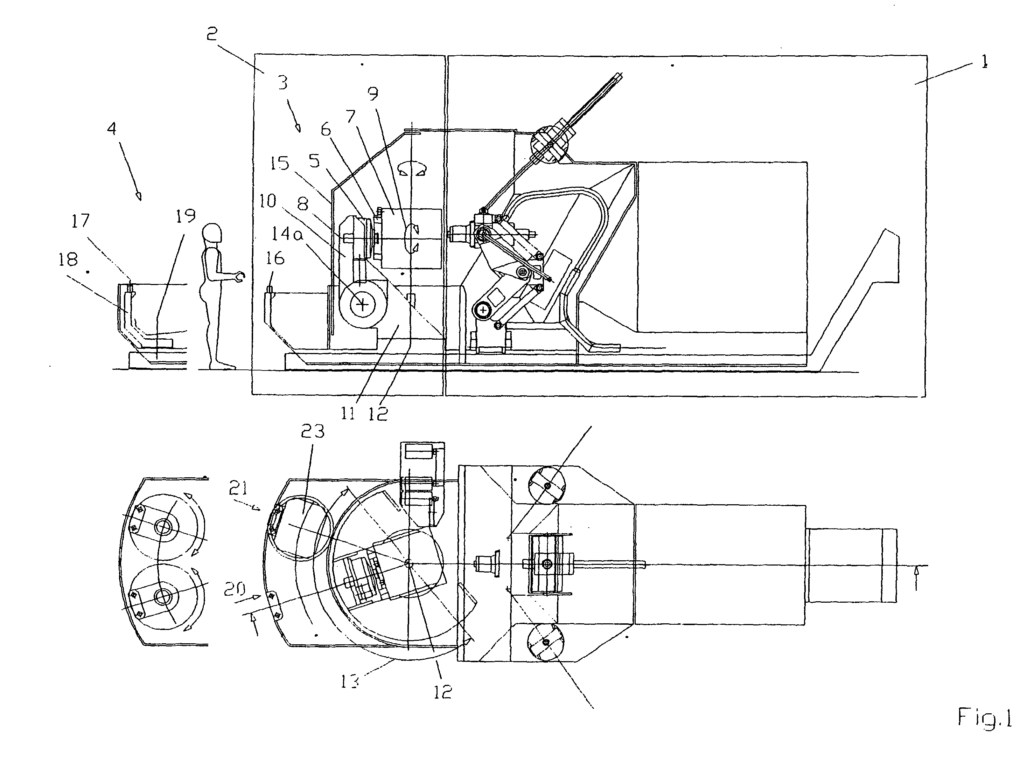

Nach beendeter Bearbeitung des Werkstücks 7 in der in Fig. 1 dargestellten vertikalen Bearbeitungsposition erfolgt ein Verdrehen des Schwenkkörpers 11 mit dem daran angeordneten Schwenkarm 10 um die NC-Schwenkachse 12 auf die Zielposition erster Spannplatz 20. Gleichzeitig wird die NC-Drehachse 8 des NC-Drehtisches 5 in die Palettenwechselposition ausgerichtet.

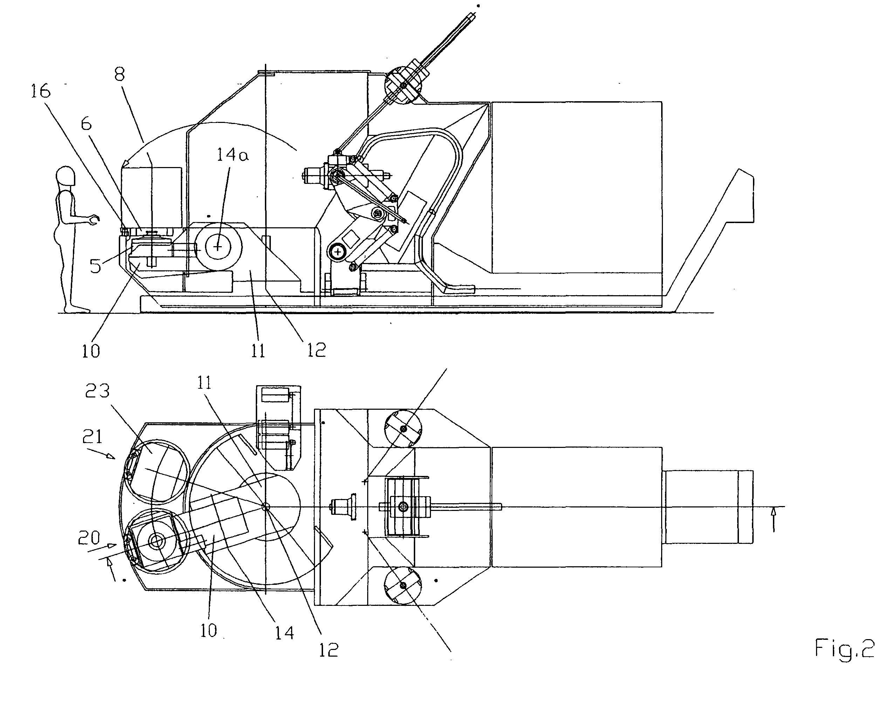

Nach dem Aufschieben der Arbeitsraumverkleidung 15 erfolgt ein Ausschwenken des Schwenkarmes 10 um die durch den Drehpunkt 14a führende Achse 14 in die in Fig. 2 dargestellte Palettenwechselposition. Dabei wird die NC-Drehachse 8 aus einem waagerechten Verlauf in der vertikalen Bearbeitungsposition in einen senkrechten Verlauf in der horizontalen Palettenwechselposition des NC-Drehtisches 5 gebracht.

In dieser horizontalen Lage des auf dem Schwenkarm 10 befindlichen NC-Drehtisches 5 verläuft die NC-Drehachse 8 parallel zu der NC-Schwenkachse 12 des Schwenkkörpers 11.

Die Palette 6 kann nun am Aufnahmezapfen 16 des ersten Spannplatzes 20 abgelegt werden.

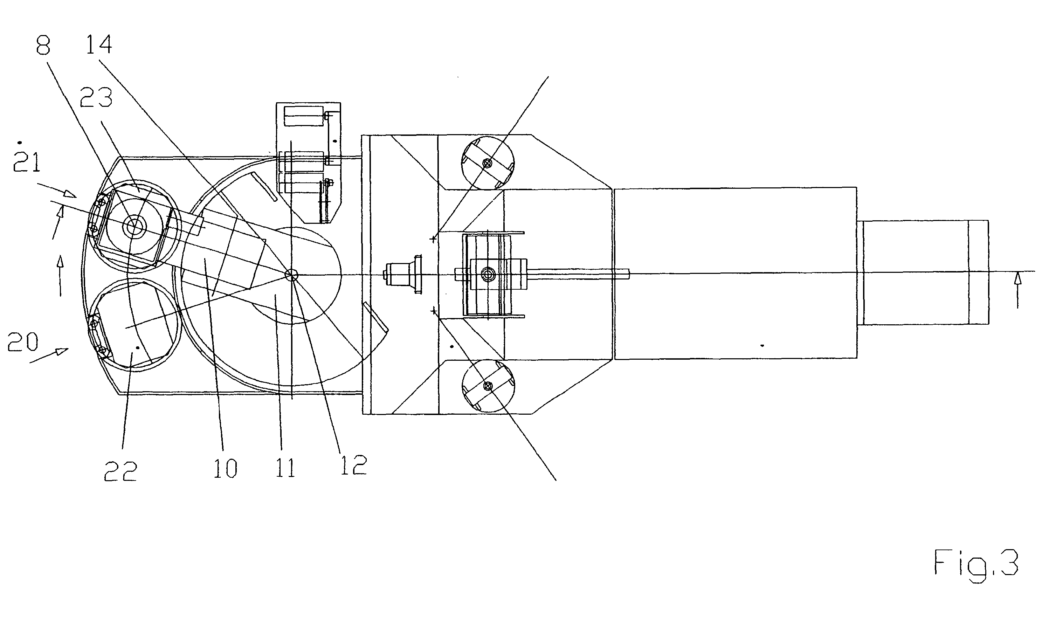

Nachdem die Palettenklemmung am NC-Drehtisch 5 gelöst wurde, wird der Schwenkkörper 11 um die NC-Schwenkachse 12 in die Zielposition zweiter Spannplatz 21 verdreht (Fig. 3).

Anschließend wird die Palette 23 am zweiten Spannplatz 21 durch den NC-Drehtisch 5 geklemmt.

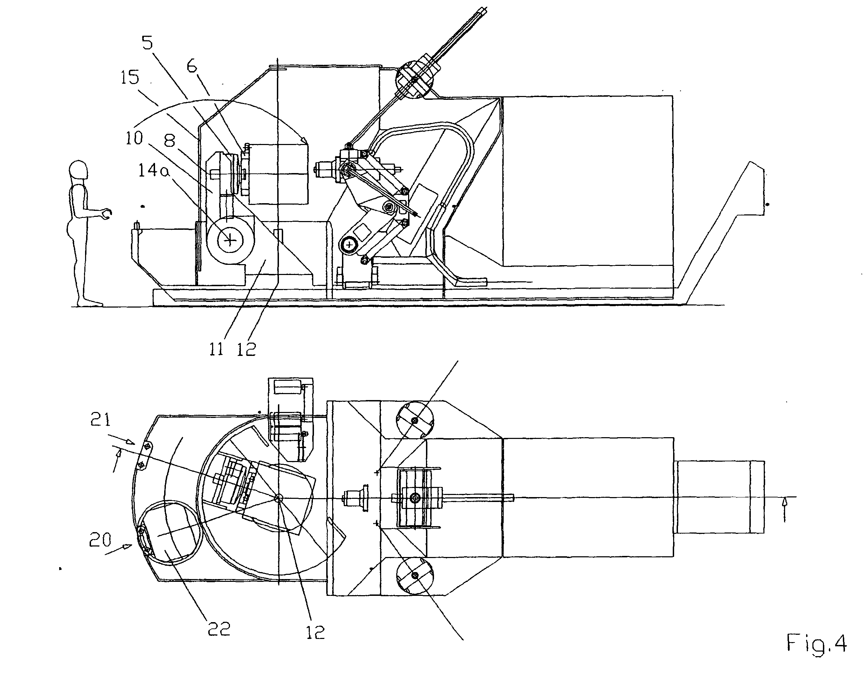

Nun kann der Schwenkarm 10 mit dem NC-Drehtisch 5 wieder um die Achse 14 zurück in die vertikale Bearbeitungsposition geschwenkt werden (Fig. 4).

Die beiden NC-Achsen - NC-Drehachse 8 und NC-Schwenkachse 12 - verlaufen wieder orthogonal zueinander und schneiden sich annähernd im Mittelpunkt des Werkstücks 7. Dadurch können Kursverluste, die sonst in senkrechter Richtung (y-Achse) und in Richtung Arbeitsspindel (z-Achse) auftreten würden, vermieden werden. Das hat den Vorteil, daß die Abmessungen der Bearbeitungseinheiten des Fräsbearbeitungszentrums geringer ausfallen können.

Nach dem Zuschieben der Arbeitsraumverkleidung 15 kann die Mehrseitenbearbeitung des Werkstücks 7 beginnen.

An dieser Stelle sei noch einmal darauf hingewiesen, daß alle fünf freiliegenden Seiten des Werkstücks 7 innerhalb einer Aufspannung in der für den Spänefall günstigen vertikalen Lage des NC-Drehtisches 5 und der auf ihm aufgespannten Palette 6 bearbeitet werden.

Zusätzlich zu dieser 5-Seiten-Bearbeitung schafft die Erfindung die Möglichkeit, noch mehr Flächen des Werkstücks 7 innerhalb dieser einen Aufspannung, bei der sich der NC-Drehtisch 5 in der vertikalen Position befindet, zu bearbeiten. Durch den bei der Drehung um die NC-Schwenkachse 12 des Schwenkkörpers 11 verwirklichten Schwenkbereich 13 ist der NC-Drehtisch 5 in eine Position gegenüber dem Werkzeug bringbar, die eine Bearbeitung von z.B. schräger Flächen und Bohrungen auch aus Richtung Paletten-Aufspannfläche ermöglicht.

Die Maschine zeigt noch weitere Vorteile:

Aufgrund des in den NC-Drehtisch integrierten bzw. durch diesen ausgeführten Palettenwechsel können sowohl die Palettenwechselzeiten stark verkürzt als auch der gerätetechnische Aufwand verringert werden.

Durch die Maschine, die einen annähernd im Mittelpunkt des aufgespannten Werkstücks befindlichen Schnittpunkt der beiden NC-Achsen aufweist, können Kursverluste vermieden und damit kleinere Abmessungen der Maschinenbaugruppen verwirklicht werden.

## Patentansprüche

1. Werkzeugmaschine, insbesondere Fräsbearbeitungszentrum, mit einer einen Werkzeugträger aufnehmenden Bearbeitungseinheit (1) mit vorzugsweise waagerechter Arbeitsspindel, mit einem um eine NC-Drehachse (8) drehbaren und um eine NC-Schwenkachse (12) schwenkbaren NC-Drehtisch (5) zur Aufnahme einer Palette (6) und/oder eines Werkstücks (7) für die Mehrseitenbearbeitung, mit mindestens zwei Spannplätzen (20,21) zum wechselseitigen Tausch der Werkstücke, **dadurch gekennzeichnet, daß** der NC-Drehtisch (5) um eine dritte, sowohl zur NC-Drehachse (8) als auch zur NC-Schwenkachse (12) orthogonal verlaufende, Achse (14) schwenkbar ist.

2. Werkzeugmaschine nach Anspruch 1, **dadurch gekennzeichnet, daß** der NC-Drehtisch (5) durch eine Schwenkbewegung um die dritte Achse (14) aus einer vertikalen in eine horizontale Position und umgekehrt bringbar ist.

3. Werkzeugmaschine nach Anspruch 1 oder 2, **dadurch gekennzeichnet, daß** in der vertikalen Position des NC-Drehtisches (5) die NC-Drehachse (8) und die NC-Schwenkachse (12) orthogonal zueinander verlaufen und sich annähernd im Mittelpunkt des sich auf dem NC-Drehtisch (5) befindenden Werkstückes (7) schneiden.

4. Werkzeugmaschine nach einem der Ansprüche 1 bis 3, **dadurch gekennzeichnet, daß** in der horizontalen Position des NC-Drehtisches (5) die NC-Drehachse (8) und die NC-Schwenkachse (12) parallel zueinander verlaufen.

5. Werkzeugmaschine nach einem der Ansprüche 1 bis 4, **dadurch gekennzeichnet, daß** der NC-Drehtisch (5) auf einem Schwenkarm (10) eines um die senkrechte NC-Schwenkachse (12) drehbaren Schwenkkörpers (11) angeordnet ist, wobei der Schwenkarm (10) zudem um die waagerechte, durch einen an seinem werkstückabgewandten, schwenkkörpernahen Ende befindlichen Drehpunkt (14a) führende Achse (14) schwenkbar ist.

6. Werkzeugmaschine nach einem der Ansprüche 1 bis 5, **dadurch gekennzeichnet, daß** der NC-Drehtisch (5) durch den um die dritte Achse (14) bewegbaren Schwenkarm (10) aus einer vertikalen Bearbeitungsposition in eine horizontale Palettenwechselposition außerhalb des Arbeitsraumes und umgekehrt schwenkbar ist.

7. Werkzeugmaschine nach einem der Ansprüche 1 bis 6, **dadurch gekennzeichnet, daß** die auf dem NC-Drehtisch (5) befestigte und mit diesem aus dem Arbeitsraum herausschwenkbare Palette (6) mit einem außerhalb des Arbeitsraumes befindlichen Spannplatz (20,21) in und außer Eingriff bringbar ist.

8. Werkzeugmaschine nach einem der Ansprüche 1 bis 7, **dadurch gekennzeichnet, daß** innerhalb des Schwenkbereiches (13) des um die NC-Schwenkachse (12) drehbaren Schwenkkörpers (11) mehr als zwei Spannplätze (20, 21, 24, 25, 26) für Paletten (6, 22, 23) und/oder Werkstücke (7) vorgesehen sind.

9. Werkzeugmaschine nach Anspruch 8, **dadurch gekennzeichnet, daß** die Mittelachsen der Spannplätze (20, 21, 24, 25, 26) auf einem fiktiven Kreisbogen angeordnet sind, dessen Radius dem Abstand der NC-Drehachse (8) des sich in der horizontalen Lage befindenden, auf dem Schwenkarm (10) befestigten NC-Drehtisches (5) von der NC-Schwenkachse (12) entspricht.

10. Werkzeugmaschine nach einem der Ansprüche 1 bis 9, **dadurch gekennzeichnet, daß** durch den bei der Drehung um die NC-Schwenkachse (12) des Schwenkkörpers (11) verwirklichten Schwenkbereich (13) der NC-Drehtisch (5) in eine Position gegenüber der das Werkzeug tragenden Bearbeitungseinheit (1) bringbar ist, die eine Bearbeitung von mehr als fünf Seiten ermöglicht.

11. Werkzeugmaschine nach einem der Ansprüche 1 bis 10, **dadurch gekennzeichnet, daß** während der gesamten Mehrseitenbearbeitung des auf der Palette (6) des NC-Drehtisches (5) aufgespannten Werkstücks (7) der NC-Drehtisch (5) vom Schwenkarm (10) des Schwenkkörpers (11) in einer vertikalen Position gehalten wird.

## Claims

1. A machine tool, especially a milling center, with a machining unit (1) receiving a side-head and with a preferably horizontal work spindle, with an NC turntable (5) which is rotatable about an NC rotary axis (8) and swivelable about an NC swiveling axis (12) for receiving a pallet (6) and/or a subject (7) for multiside machining, with at least two clamping places (20, 21) for the alternating exchange of the subjects, **characterized in that** the NC turntable (5) is swivelable about a third axis (14) which extends orthogonally to the NC rotational axis (8) as well as the NC swiveling axis (12).

2. A machine tool as claimed in claim 1, **characterized in that** the NC turntable (5) can be brought from a perpendicular to a horizontal position and vice-versa by a swiveling movement about the third axis (14).

3. A machine tool as claimed in claim 1 or 2, **characterized in that** in the perpendicular position of the NC turntable (5) the NC rotational axis (8) and the NC swiveling axis (12) extend orthogonally with respect to each other and intersect approximately in the center point of the subject (7) situated on the NC turntable (5).

4. A machine tool as claimed in claim 1 to 3, **characterized in that** the NC rotational axis (8) and the NC swiveling axis (12) extend parallel with respect to each other in the horizontal position of the NC turntable (5).

5. A machine tool as claimed in one of the claims 1 to 4, **characterized in that** the NC turntable (5) is arranged on a swiveling arm (10) of a swiveling body (11) rotatable about the perpendicular NC swiveling axis (12), with the swiveling arm (10) further being swivelable about the horizontal axis (14) leading through a center of motion (14a) situated at its end averted from the subject and close to the swiveling body.

6. A machine tool as claimed in one of the claims 1 to 5, **characterized in that** the NC turntable (5) is swivelable by the swiveling arm (10) which is movable about the third axis (14) from a perpendicular machining position to a pallet changing position outside of the working space and vice-versa.

7. A machine tool as claimed in one of the claims 1 to 6, **characterized in that** the pallet (6) which is fastened to the NC turntable (5) and can be swiveled out of the working space with the same can be brought into and out of engagement with a clamping place (20, 21) situated outside of the working space.

8. A machine tool as claimed in one of the claims 1 to 7, **characterized in that** more than two clamping places (20, 21, 24, 25, 26) for pallets (6, 22, 23) and/or subjects (7) are provided within the swiveling region (13) of the swiveling body (11) which is rotatable about the NC swiveling axis (12).

9. A machine tool as claimed in claim 8, **characterized in that** the central axes of the clamping places (20,21, 24, 25, 26) are arranged on a fictitious arc of a circle whose radius corresponds to the distance of the NC rotational axis (8) of the NC turntable (5) from the NC swiveling axis (12), which NC turntable is situated in the horizontal position and fastened to the swiveling arm (10).

10. A machine tool as claimed in one of the claims 1 to 9, **characterized in that** as a result of the swiveling region (13) as realized by the NC swiveling axis (12) of the swiveling body (11), the NC turntable (5) can be brought to a position with respect to the machining unit (1) supporting the tool which allows a machining of more than five sides.

11. A machine tool as claimed in one of the claims 1 to 10, **characterized in that** the Nc turntable (5) is held in a perpendicular position by the swiveling arm (10) of the swiveling body (11) during the entire multi-side machining of the subject (7) clamped on the pallet (6) of the NC turntable (5).

## Revendications

1. Machine-outil, notamment centre de fraisage avec une unité d'usinage (1) recevant un porte-outil et pourvu d'une broche de préférence horizontale, avec une table tournante (5) destinée à recevoir une plate-forme (6) et/ou une pièce (7) pour l'usinage sur plusieurs faces, ladite table étant mobile en rotation autour d'un axe de rotation CN (8) et en pivotement autour d'un axe de pivotement CN (12), avec au moins deux endroits de serrage (20, 21) pour changer les pièces de place, **caractérisée en ce que** la table tournante CN (5) est pivotable autour d'un troisième axe (14) à la fois orthogonal à l'axe de rotation CN (8) et à l'axe de pivotement CN (12).

2. Machine-outil selon la revendication 1, **caractérisée en ce que** la table tournante CN (5) peut être amenée d'une position verticale dans une position horizontale et inversement en la faisant pivoter autour du troisième axe (14).

3. Machine-outil selon la revendication 1 ou 2, **caractérisée en ce que**, lorsque la table tournante CN (5) se trouve en position verticale, l'axe de rotation CN (8) et l'axe de pivotement (12) sont orthogonaux et se coupent approximativement au centre de la pièce (7) se trouvant sur la table tournante CN (5).

4. Machine-outil selon l'une quelconque des revendications 1 à 3, **caractérisée en ce que**, lorsque la table tournante CN (5) se trouve en position horizontale, l'axe de rotation CN (8) et l'axe de pivotement (12) sont parallèles.

5. Machine-outil selon l'une quelconque des revendications 1 à 4, **caractérisée en ce que** la table tournante CN (5) est montée sur un bras pivotant (10) d'un élément pivotant (11) mobile en rotation autour de l'axe de pivotement CN vertical (12), le bras pivotant (10) étant en outre pivotable autour de l'axe horizontal (14) qui passe par un centre de rotation (14a) se situant à son extrémité proche de l'élément pivotant et éloignée de la pièce.

6. Machine-outil selon l'une quelconque des revendications 1 à 5, **caractérisée en ce que**, par l'intermédiaire d'un bras pivotant (10) mobile autour du troisième axe (14), la table tournante CN (5) est pivotable d'une position verticale d'usinage dans une position horizontale de changement de plate-forme située en dehors de l'espace de travail et inversement.

7. Machine-outil selon l'une quelconque des revendications 1 à 6, **caractérisée en ce que** la plate-forme (6), fixée sur la table tournante CN (5) et pivotable hors de l'espace de travail de concert avec celle-ci, est adaptée à être engagée et désengagée d'un endroit de serrage (20, 21) situé en dehors de l'espace de travail.

8. Machine-outil selon l'une quelconque des revendications 1 à 7, **caractérisée en ce que** plus de deux endroits de serrage (20, 21, 24, 25, 26) pour plate-formes (6, 22, 23) et/ou pièces (7) sont prévus au sein de la zone de pivotement (13) de l'élément pivotant (11) mobile en rotation autour de l'axe de pivotement CN (12).

9. Machine-outil selon la revendication 8, **caractérisée en ce que** les axes centraux des endroits de serrage (20, 21, 24, 25, 26) sont situés sur un arc de cercle imaginaire dont le rayon correspond à la distance qui sépare l'axe de rotation CN (8) de la table tournante CN (5) qui est fixée sur le bras pivotant (10) et se trouve en position horizontale de l'axe de pivotement CN (12).

10. Machine-outil selon l'une quelconque des revendications 1 à 9, **caractérisée en ce que** la table tournante CN (5) est adaptée à être amenée dans une position par rapport à l'unité d'usinage (1) portant l'outil dans laquelle un usinage sur plus de cinq faces est possible grâce au pivotement (13) réalisé lors de la rotation de l'élément pivotant (11) autour de l'axe de pivotement CN (12).

11. Machine-outil selon l'une quelconque des revendications 1 à 10, **caractérisée en ce que** la table tournante CN (5) est maintenue en position verticale par le bras pivotant (10) de l'élément pivotant (11) pendant tout l'usinage sur plusieurs faces de la pièce (7) serrée sur la plate-forme (6) de la table tournante CN (5).
